# EUROPEAN PATENT APPLICATION

(11) **EP 3 355 586 A1**
(43) Date of publication of application: **01.08.2018**
(21) Application number: 17153512.3
(22) Date of filing: 27.01.2017
(51) Int. Cl.: H04N 21/2343, H04N 21/2365, H04N 21/4223

(54) **METHOD AND SYSTEM FOR TRANSMITTING ALTERNATIVE IMAGE CONTENT OF A PHYSICAL DISPLAY TO DIFFERENT VIEWERS**

(71) Applicant: LANE GmbH, 18184 Roggentin (DE)
(72) Inventor: BOLL, Hans-Peter, 18258 Schwaan (DE)
(74) Representative: Reitstötter Kinzebach

(57) **Abstract**

The present invention relates to a method and a system for transmitting alternative image content of a physical display to different viewers, comprising: generating at least two different sets of image data, each set of image data comprising a sequence of individual images; displaying the images of said at least two sets of image data in a time-sliced multiplexed manner on said physical display; generating at least one video stream of a scene which includes said physical display, said video stream consisting of video frames captured synchronously with the displaying of the images of one of said at least two sets of image data on said physical display; and transmitting said video stream to a sub-set of said viewers. The present invention also relates to a control interface implementing the claimed method.

## Description

The present invention concerns a method and a system for transmitting alternative image content of a physical display to different viewers.

Active displays, such as Light-Emitting Diode (LED) displays are widely used as billboards or signboards to convey information or advertisements to viewers. Typically, such displays are used in sports or entertainment events. Consequently, such displays often appear in television broadcasts (TV) or video streams which are directed to a large variety of different viewers, a typical example being viewers in different countries with different native languages or different cultural backgrounds. In order to target information/advertisements shown on these displays to specific sub-sets of these viewers, methods have already been developed to vary the content of a display between viewers observing the display via a television broadcast or a video stream. For instance, US patent application US 2002/0144263 describes a method and an apparatus for grouping targeted advertisements on an advertisement channel.

A more elegant approach is to insert the advertisement as an integral part of the video sequence, e.g., displaying the advertisement on a billboard shown in the video sequence. GB 2305051 describes an apparatus for an automatic electronic replacement of a billboard in a video image. Similarly, GB 2305049 describes an electronic billboard replacement system for use in a television broadcast system. However, in order to create a good impression and maintain a natural look of the composed image, the advertisement needs to be adapted to the rest of the scene in the video sequence. Typically, this approach requires human intervention to obtain results of good quality. Generally, these electronic or software-based approaches are often not satisfactory as far as viewer experience is concerned, especially when broadcast schemes involve dynamic scenes partially obscuring the billboard.

In international patent application WO 2005/112476, a method has been described which allows variation of the content of a display between viewers in a television broadcast. This prior art document describes a method that enables multiple viewers to view one of several video streams simultaneously displayed on a single video display. However, the viewers are required to use shutter viewing glasses synchronized to one of the video streams shown on the display. Such a system is not suitable for television broadcasts of the display itself.

These problems are mitigated by a solution described in International Patent Application WO 2007/125350. This prior art document describes a method and a device for varying the content of a physical display which appears as part of a scene in a television broadcast between viewers of the television broadcast. The display content comprises direct viewer display images directed to the viewers present at the event, for instance a sports event, and a broadcast viewer display images directed to the television viewers. The physical display displays two or more temporarily interleaved data content instances wherein the display image for the broadcast viewer is synchronized to show one of said data content instances. A camera is used to record a scene of the event including the physical display such as a signboard and a control system is used to synchronize the camera and the signboard. The video stream recorded by the camera which comprises all different data content instances is fed to a de-multiplexer which generates individual feeds corresponding to specific data content instances shown on the physical display. The method and system described in WO 2007/125350 requires dedicated camera technology which allows recording at frame rates which are much higher than the usual frame rate used for television or video broadcasts because the camera is required to capture each image displayed on the signboard. Also, the computing power of the de-multiplexer which generates the individual video feeds has to be correspondingly high. Thus, the method described in WO 2007/125350 requires new dedicated equipment and the corresponding costs for establishing such a technology at sports and entertainment events are high Moreover, with the method of WO 2007/125350, the viewing experience of the direct viewers of an event is reduced because the insertion of dedicated images for the broadcast viewers results in an unsteady flickering of the signboard, even when the time intervals during which an image is shown, are too short for the viewer to consciously perceive an image content.

It has therefore been a technical problem of the present invention to provide a method and a system for transmitting alternative image content of a physical display to different viewers which can be based on existing camera and display technology thus allowing the method of the invention to be readily and cost-effectively deployed in many sports and event arenas around the world. Moreover, the method of the invention shall improve the user experience for the direct viewers of an event as well.

This technical problem is solved by the method of claim 1. Preferred embodiments of the method of the invention are subject of the dependent claims.

Accordingly, the present invention is directed to a method for transmitting alternative image content of a physical display to different viewers, comprising:
generating at least two different sets of image data, each set of image data comprising a sequence of individual images;
displaying the images of said at least two sets of image data in a time-sliced multiplexed manner on said physical display;
generating at least one video stream of a scene which includes said physical display, said video stream consisting of video frames captured synchronously with the displaying of the images of one of said at least two sets of image data on said physical display; and
transmitting said video stream to a sub-set of said viewers.

According to the invention, the at least two different sets of image data which are shown on the physical display can comprise still images or animated images, e.g., a film. When still images are shown on the physical display, the images of one set of image data are essentially identical. When one set of image data comprises a film, the images of one set of image data may differ from each other so that an animated sequence is displayed. Accordingly, in the following description, the terms video stream and television broadcast are used interchangeably and are intended to include a variety of schemes for transmitting image data to viewers, including still images, animated images, video, with or without additional audio data.

According to the present invention, at least one video stream of a scene which includes the physical display is generated, typically by recording the scene with a video camera. The video camera is triggered in such a manner that the video stream consists of video frames captured synchronously with the displaying of the images of one of said at least two sets of image data on the physical display. Thus, in contrast to the method described in document WO 2007/125350, the video camera is not required to capture all images of all sets of image data shown on the physical display but only the images of one of the sets of image data shown on the physical display. Accordingly, the minimum frame rate of the video camera used in the method of the present invention is only as high as the frame rate of one set of image data. Consequently, conventional video cameras known in the art can be employed in the method of the present invention.

In the sense of the present application, a "set of image data" corresponds to the images (be it still images or a film) shown to one particular sub-set of viewers. According to the present invention, at least two sets of image data are shown on the physical display while at least one video stream comprising one set of said two sets of image data is generated. In its most simple form, the method of the present invention comprises one set of image data intended for direct viewers of an event, e.g., viewers actually present at a sports or entertainment event. The second set of image data is directed to viewers of a video stream. More generally spoken, if the sets of image data shown on the physical device include image data for direct viewers, the number of generated video streams corresponds to the number of sets of image data minus one.

In another embodiment of the present invention where no dedicated set of image data for direct viewers is required, the number of video screens corresponds to the number of sets of image data shown on the physical display. Consequently, a video stream is generated for each set of image data displayed on the physical device. While the present invention can be implemented using state of the art video camera technology, a dedicated video camera is used for each video stream. Consequently, a demultiplexing of a single video stream comprising all image data for all sub-sets of viewers is not required when implementing the method of the present invention.

According to a preferred embodiment of the method of the present invention, a video stream consisting of video frames captured synchronously with the displaying of the images of one of said at least two sets of image data is accomplished by generating synchronization signals triggering the concurrent displaying of images of said at least one set of image data on said physical device and capturing of video frames of the video stream associated to said set of image data. For instance, a trigger impulse is sent to an image buffer of the physical display triggering the displaying of a specific image of a specific set of image data and a concurrent impulse is sent to a video camera triggering the video camera to capture a video frame of the scene.

Preferably, the synchronization signals are based on a master clock which corresponds to the frame rate of the video stream. Any conventional frame rate used in video or film production can be employed. For instance, if a 50p video stream (50 full frames per second) is generated, a 50 Hz master clock can be employed.

According to a preferred embodiment, the master clock is used to generate slave clocks dedicated for each individual set of image data. The slave clocks are obtained by shifting the master clock by a specific delay for each video screen. For instance, if *n* sets of image data are displayed on the physical device, slave clock *i(n)* is obtained by shifting the master clock with a delay *D = (n-1) · Δt.* Accordingly, the synchronization signals for the first set of image data correspond to the master clock while the synchronization signals for the subsequent sets of image data are phase-shifted within the periodic time of the master clock. For instance, at a frame rate of 50 Hz, the corresponding periodic time T = 1/*frame rate* = 20 ms. The minimum shutter time of each camera associated to a particular video screen determines the maximum number of channels (sets of image data) which can be displayed on the physical display and transmitted via dedicated video streams. Accordingly, with a shutter time of *Δs*, the maximum number of sets of image data *n* is determined by the equation *n · Δs* ≤ *1*/*f.* Similarly, the physical display has to be able to show images at the required frame rate of *n · f*. Commercially available displays as used in sports arenas have frame rates up to 1200 Hz or even 2400 Hz so that at least 24 sets of image data can be presented.

According to one embodiment of the present invention, the first set of image data corresponds to the images presented for the direct viewers. According to this embodiment, the first set of image data is shown within the delay period *Δt* between subsequent synchronization signals for the video streams. In a particularly preferred embodiment of the method of the invention, shutter time *Δs* and delay period *Δt* are selected such that approximately 90 percent of the time within a frame period of the master clock, images of the first set of images directed to the direct viewers are shown *(n·Δs≤0.1·(n-1)·Δt*).

According to another embodiment of the present invention, at least one set of image data comprises a sequence of real images and inverse or complementary images of the respective real images. According to this preferred embodiment, a real image and the respective inverse image are shown in immediate succession at a frequency which cannot be resolved by the human eye. Accordingly, a direct viewer perceives the sequences of real images and inverse images as a neutral, featureless image. According to the invention, each set of image data intended for the video streams is presented in this manner, i.e. as a sequence of real images and correspondingly inverse/complementary images, while the set of image data intended for the directed viewers is presented as images only. As a viewer present at an event views all images shown on the physical display, the inserted set of images intended for the video streams are less disturbing because the sequence of image and inverse image essentially cancel out.

As the frame rate for recording the video is usually higher than the time resolution of the human eye, e.g. higher than 20 Hz (20 frames per second), it is not necessary to insert an inverse/complementary image after each image presented to the physical display. Therefore, according to another embodiment of the invention, an inverse/complementary image is calculated on the basis of a group of real images which comprises more than one real image. The presentation of the inverse/complementary image is associated with presentation of this group of real images, e.g. it is shown before or after the group of real images are presented or even within the group of real images. In one embodiment, the group of real images comprise all images shown within one time period (*1*/*(frame rate)*) of the master clock so that only one inverse/complementary image is shown within each time period.

In accordance with one embodiment, when the display is a color display, the sequence of image and inverse image is established by means of time multiplexing a fundamental image with a color-inverted image thereof, on a pixel by pixel basis, thereby generating a resulting compound image on the display which is substantially featureless to a direct viewer of the display. Each inverse color data component can be generated from, and as a function of, a corresponding color data component of the fundamental image signal, and is therefore representative of the same color component of the fundamental image. Since signal amplitude is directly related to image color intensity, albeit non-linearly, the amplitude of each inverse color data component is determined as a function of the amplitude of its corresponding color data component, such that the time-weighted average of the color intensities corresponding to the amplitudes of all color data components and corresponding inverse color data components is substantially the same for each compound color data component corresponding to the same pixel. The calculated amplitude of each inverse color data component during a given display frame is set such that the intensity of each corresponding color component of the resulting compound image is substantially the same as all other color components. As the fundamental and inverse color data components are time multiplexed at a sufficiently high frequency that the human eye cannot discern there between, the intensities of all color components of the resulting image generated by the compound image signal will appear to be substantially the same for each pixel. As a consequence, there is no visible variation in color or intensity from pixel to pixel, and the resulting compound image appears to be substantially featureless. Thus, by time multiplexing the individual color data components of a fundamental image signal with corresponding inverse color data components, on a pixel by pixel basis, the fundamental image is essentially time multiplexed with a computed color inverted image thereof, to generate a resulting compound image which is substantially neutral and featureless to the naked eye of an observer.

According to a preferred embodiment of this presentation of inverse images, the inverse image of each preceding and/or subsequent image is generated in such a way that the combined image and inverse image result in a perceived image having a homogenous intensity.

According to a further preferred embodiment of the invention, the physical display is a light-emitting diode (LED) array/display. Preferably, the LED display is a signboard or a billboard.

According to a further embodiment of the invention, the scene which is recorded in one or more video streams, is part of a sports event or an entertainment event.

The present invention further concerns a control interface configured to carry out the method of the invention, said control interface comprising means for receiving or generating a master clock signal, means for generating two or more time-shifted slave clock signals and means for generating trigger signals in correspondence with said two or more time-shifted slave clock signals.

Preferably, the control interface further comprises at least one input receiving an external master clock signal, at least two slave outputs for transmitting said slave clock signals to two or more cameras and at least on trigger outputs for transmitting trigger signals to a physical display for displaying different sets of image data on said physical display in a time-sliced multiplexed manner.

According to one embodiment, the control interface is a dedicated hardware interface, where said means for receiving or generating a master clock signal, means for generating two or more time-shifted slave clock signals and means for generating trigger signals in correspondence with said two or more time-shifted slave clock signals are at least partly hardware-implemented in dedicated micro-controllers.

According to another embodiment, the control interface is completely implemented in software. Accordingly said means for receiving or generating a master clock signal, means for generating two or more time-shifted slave clock signals and means for generating trigger signals in correspondence with said two or more time-shifted slave clock signals are at implemented as an executable program in a general purpose computer.

Finally, the present is directed to a system for transmitting alternative image content of a physical display to different viewers, comprising at least one physical display, a control interface as described above for displaying at least first and second sets of image data on said physical display in a time-sliced multiplexed manner, at least one camera for recoding a scene including said physical display in correspondence with said first set of image data, means for generating at least one video stream from video data provided by said least one camera and transmitting said video stream to a sub-set of said viewers.

In the following, a preferred embodiment of the present invention will be described in more detail making reference to the enclosed drawings. In the drawings,
- Figure 1: shows a schematic overview of a system implementing the method of the present invention;
- Figure 2: shows a timeline of the master and slave clocks generated according to a first embodiment of the method of the invention; and
- Figure 3: shows a timeline of the slave clocks generated according to a second embodiment of the method of the invention

The present invention is now described in more detail with reference to a typical example, namely a television broadcast of a sports event.

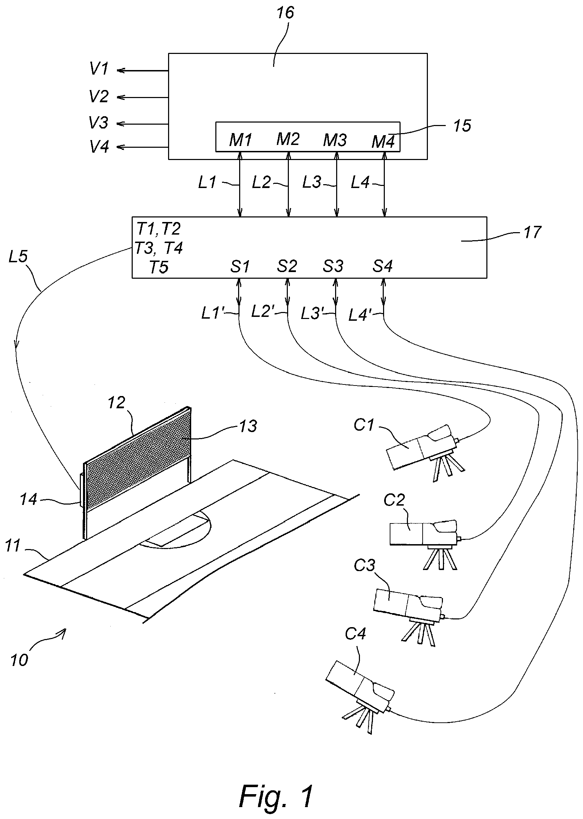

As depicted in Figure 1, a multiplicity of cameras C1, C2, C3, C4 is used to provide video footage of a sports event exemplified by a (partly depicted) soccer playing field 10. At a side line 11 of the playing field 10, an advertisement billboard 12 having an LED display 13 is installed. The advertisement billboard 12 comprises a controller 14 which controls delivery of still and/or animated images to the LED array 13. In a conventional multi-camera broadcasting scheme, cameras C1, C2, C3 and C4 have to be synchronized in order to allow seamless switching from one camera to another. To this effect, cameras C1, C2, C3 and C4 receive a synchronization signal from a master clock 15 which is part of a television control unit, for instance housed in an outside broadcasting unit (OB unit), for instance in an OB van 16. In a conventional TV broadcast, cameras C1, C2, C3 and C4 are synchronized with identical master clock signals M1, M2, M3, M4 (i.e. M1=M2=M3=M4). These synchronization signals can be transmitted to cameras C1, C2, C3, C4 via lines L1, L2, L3 and L4, respectively. As indicated by the arrows, lines L1, L2, L3 and L4 can be bidirectional allowing not only synchronization signals to be transmitted to the cameras C1, C2, C3 and C4, but also video signals from the cameras to be fed to OB van 16. As a matter of course, the bidirectional communication between OB van 16 and cameras C1, C2, C3 and C4 can be wire-based or wireless or a combination of both.

In a conventional TV broadcast, the video feeds of the cameras are usually combined to generate a single video stream delivered to the viewers. In contrast, in the method according to the present invention cameras C1, C2, C3 and C4 are used to generate different video feeds V1, V2, V3, V4 for different sub-sets of viewers, e.g. viewers in different countries. These different video feeds will show essentially the same scene of the event but differ in the information displayed on LED array 13. In order to allow different cameras to record different information displayed on the LED array, the concurrent master clock signals M1, M2, M3 and M4 which are emitted from master clock 15 are not directly fed to the respective cameras C1, C2, C3 and C4. Rather, the concurrent master clock signals are fed to an interface 17, which allows introducing a predetermined time delay (phase shift) between the synchronization signals delivered to the respective cameras. The phase shifted signals are designated as slave clock signals S1, S2, S3 and S4, respectively, which are then transmitted via bidirectional lines L1', L2', L3' and L4' to cameras C1, C2, C3 and C4. In the present case, slave signal S1 corresponds to the master clock signal M1 while signals S2, S3 and S4 are phase-shifted by delays Δt, 2·Δt and 3·Δt with respect to the corresponding master clock signals M2, M3 and M4, respectively.

Moreover, concurrently with slave clock signals S1, S2, S3 and S4, interface 17 generates trigger signals T1, T2, T3 and T4 are transmitted via line L5 to the controller 14 of the LED array 13 in order to ensure that images directed to the specific sub-sets of viewers are shown on the LED array 14 of advertisement billboard 12 at the respective (phase-shifted) trigger times of cameras C1, C2, C3 and C4.

In one embodiment of the invention, one of the cameras could be used to show the same set of image data which is intended for the direct viewers present at the event. In this case, the number of sets of image data would correspond to the number of cameras phase-shifted with respect to each other. However, in the example described in the figures, an extra set of image data is presented to the direct viewers.

Accordingly, a total of five sets of image data are provided which can be displayed on the LED array 13 at specific times determined by the interface 17 via controller 13. To this effect, interface 17 not only generates trigger signals T1, T2, T3, T4 but also a trigger signal T0 which is used to show the images of the set of image data directed to the direct viewers.

Specifically, there are four sets of image data dedicated to the respective four sub-sets of viewers which can view the sports event receiving dedicated information or advertisements on the LED array 13. Camera C1 generates a video stream V1 for a first sub-set of viewers, while cameras C2, C3 and C4 generate respective video feeds V2, V3 and V4 for the second, third and fourth sub-set of viewers.

The fifth set of image data is used to depict the images which are intended for the direct viewers that are present at the sports event. As described above, in a preferred embodiment of the invention the LED array is controlled in such a manner that most of the time, the images intended for the direct viewers are displayed on the LED array 13.

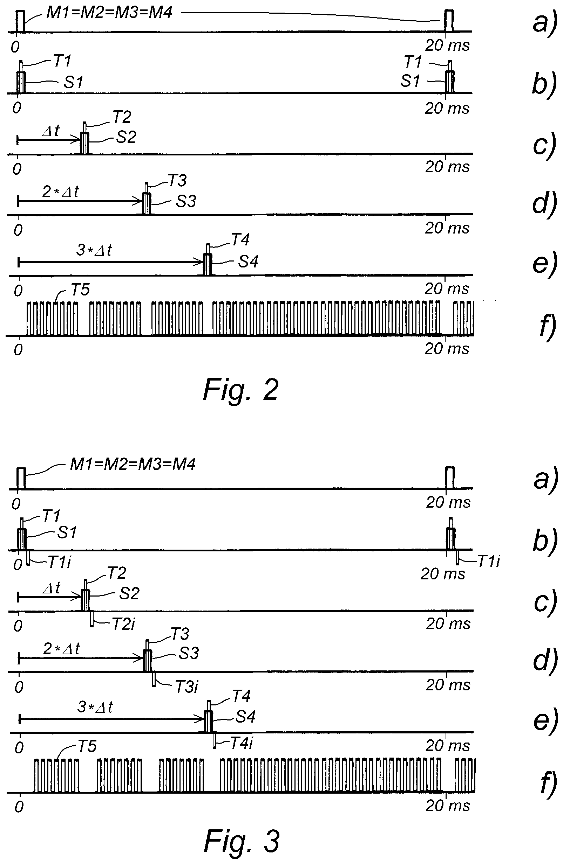

Figure 2 depicts the respective synchronization signals used in the method of the invention. Figure 2a shows a master clock signal emitted at a rate of 50 Hz, e.g. directed to a 50 frames per second video recording. Figures 2b, 2c, 2d and 2e correspond to the slave clock signals S1, S2, S3 and S4 generated by the interface 17. As can be taken from Figure 2, each slave signal is face-shifted by a delay *n·Δt,* with n = 0, 1, 2 and 3, respectively. Signals S1, S2, S3 and S4 trigger the shutter times of the respective cameras C1, C2, C3, C4.

While the shutter of a camera is open, LED array 13 shows an image of the respective set of image data as triggered by trigger pulses T1, T2, T3 and T4 respectively.

Figure 2f depicts the trigger pulses T5 for the fifth sub-set of image data directed to the direct viewers. In the presently described embodiment, these images are only shown on the LED array when no camera is active. As can be taken from Figure 2, the frame rate of the LED array is much higher than the frame rate of the cameras.

Figure 3 depicts a variant of the synchronization scheme of Figure 2, where for each slave clock pulse two LED array trigger pulses are generated. The leading pulses T1, T2, T3 and T4 trigger the actual image to be recorded by the respective camera. Immediately after a video frame has been recorded, i.e. after termination of slave signals S1, S2, S3 and S4, respectively, pulses T1i, T2i, T3i and T4i are generated triggering the displaying of an inverse image of the respective image shown at T1, T2, T3 and T4. Image and inverse image are shown at a rate which cannot be resolved by the naked eye thus generating a smoother viewing experience for the direct viewers.

It should be noted that in the context of the present invention, each camera C1, C2, C3 and C4 can represent a group of cameras, each camera of the group being triggered by the same synchronization signal. The video stream V1, V2, V3 and V4 generated by each group of cameras can therefore, for example, be comprised of multi-camera feeds, e.g. showing the event from different angles.

Also, the terms synchronization signal, master clock signal, slave clock signal or trigger signal and corresponding inputs and outputs at the control interface are to be construed broadly. These signals can be analog signals, digital signals or a combination of both. These signals can be wire-based or wireless signals. Especially when digital signals are involved, these signals can convey further information in addition to timing/trigger information. For instance, the trigger signals can convey information concerning the displaying of a particular image in a particular set of image data. Also, while cameras C1, C2, C3, C4 have been shown to be connected to the interface via dedicated lines, the slave clock output of the interface can also be a single output, e.g. a single data bus on which digitally addressed slave clock signals S1, S2, S3 and S4 can be transmitted to cameras C1, C2, C3, C4 linked to the data bus.

## Claims

1. A method for transmitting alternative image content of a physical display to different viewers, comprising:
generating at least two different sets of image data, each set of image data comprising a sequence of individual images;
displaying the images of said at least two sets of image data in a time-sliced multiplexed manner on said physical display;
generating at least one video stream of a scene which includes said physical display, said video stream consisting of video frames captured synchronously with the displaying of the images of one of said at least two sets of image data on said physical display; and
transmitting said video stream to a sub-set of said viewers.

2. The method of claim 1, wherein a video stream is generated for each set of image data displayed on said physical display.

3. The method of one of claims 1 or 2, comprising generating synchronization signals triggering the concurrent displaying of images of said at least one set of image data on said physical and capturing of video frames of the video stream associated to said set of image data.

4. The method of claim 3, wherein said synchronization signals are based on a master clock corresponding to the frame rate of said video stream.

5. The method of claim 4, wherein said synchronization signals comprise slave clocks obtained by shifting said master clock by a specific delay for each video stream.

6. The method of one of claims 1 to 6, wherein at least one set of image data comprises a sequence of images and inverse images.

7. The method of claim 6, wherein the inverse image of each preceding and/or subsequent image is generated such that the combined image and inverse image result in a perceived image having a homogenous intensity.

8. The method of one of claims 1 to 7, wherein the physical display is a LED display.

9. The method of claim 8, wherein the LED display is a signboard or billboard.

10. The method of one of claims 1 to 9, wherein where said scene is part of a sports event or an entertainment event.

11. A control interface (17), configured to carry out the method of one of claims 1 to 10, comprising means for receiving or generating a master clock signal, means for generating two or more time-shifted slave clock signals and means for generating trigger signals in correspondence with said two or more time-shifted slave clock signals.

12. The control interface of claim 11, further comprising at least one input (M1, M2, M3, M4) receiving an external master clock signal, at least two slave outputs (S1, S2, S3, S3, S4) for transmitting said slave clock signals to two or more cameras (C1, C2, C3, C4) and at least on trigger outputs (T1, T2, T3, T4, T5) for transmitting trigger signals to a physical display (12,13) for displaying different sets of image data on said physical display (12, 13) in a time-sliced multiplexed manner.

13. The control interface of one of claims 11 or 12, wherein said means for receiving or generating a master clock signal, means for generating two or more time-shifted slave clock signals and means for generating trigger signals in correspondence with said two or more time-shifted slave clock signals are at least partly hardware-implemented in dedicated micro-controllers.

14. The control interface of one of claims 11 or 12, wherein said means for receiving or generating a master clock signal, means for generating two or more time-shifted slave clock signals and means for generating trigger signals in correspondence with said two or more time-shifted slave clock signals are at implemented as an executable program in a general purpose computer.

15. A system for transmitting alternative image content of a physical display to different viewers, comprising:
at least one physical display (12,13),
a control interface (17) according to one of claims 11 to 14 for displaying at least first and second sets of image data on said physical display (12, 13) in a time-sliced multiplexed manner,
at least one camera (C1, C2, C3, C4) for recoding a scene including said physical display (12,13) in correspondence with said first set of image data,
means for generating at least one video stream from video data provided by said least one camera (C1, C2, C3, C4); and
transmitting said video stream to a sub-set of said viewers.
